# EUROPEAN PATENT SPECIFICATION

(11) **EP 1 731 978 B1**
(45) Date of publication and mention of the grant of the patent: **16.09.2009**
(21) Application number: 06011374.3
(22) Date of filing: 01.06.2006
(51) Int. Cl.: G05B 19/18, B25J 19/06

(54) **Robot controller having portable operating part**
Robotersteuerung mit tragbarem Betriebsteil
Commande de robot portable avec un élément opérant

(30) Priority: 10.06.2005 JP 2005171091
(43) Date of publication of application: 13.12.2006
(73) Proprietor: FANUC LTD, Minamitsuru-gun, Yamanashi 401-0597 (JP)
(72) Inventor: Hashimoto, Yoshiki, Hadano-shi, Kanagawa 257-0025 (JP); Ohya, Tomoki FANUC Manshonharimomi, Minamitsuru-gun, Yamanashi 401-0511 (JP); Morita, Satoru FANUC Manshonharimomi, Minamitsuru-gun, Yamanashi 401-0511 (JP)
(74) Representative: Thum, Bernhard

(56) References cited:
- EP-A- 0 734 817
- WO-A-02/078915
- DE-A1- 10 344 359
- US-A- 6 051 894

## Description

### BACKGROUND OF THE INVENTION

### 1. Field of the Invention

The present invention relates to a robot controller and, in particular, a robot controller capable of performing radio communication between a control part of the controller and a portable operating part having an emergency stop button and a secondary battery therein.

### 2. Description of the Related Art

A major application of a portable operating part is robot teaching. When a robot is to be taught, an operator usually enters inside a safety fence with the portable operating part in his hand and performs teaching near the robot. In order to ensure the security of the operator, the portable operating part is provided with an emergency stop button for stopping the robot in case of emergency. When the emergency stop button is pushed, the robot controller immediately shuts the power to a driving motor of the robot to stop the robot.

In general, the portable operating part is connected to a fixed control part of the robot controller via an electric cable. The electric cable is used for supplying power to the portable operating part, as well as for receiving a contact signal of the emergency stop button or key input of the portable operating part and for transmitting image information to the portable operating part. However, it is preferable that an electric cable not be used, because the electric cable may become an obstacle to the operation of the operator inside of the safety fence.

Therefore, in order to communicate the portable operating part with the control part without using an electric cable, as disclosed in Japanese Unexamined Patent Publication No. 2003-288105, for example, the communication between them is performed by radio and the portable operating part contains a secondary battery.

When radio communication is performed, an emergency stop signal is also transmitted without wires. Therefore, if radio communication is stopped, the emergency stop signal cannot be transmitted. In order to ensure the security of the operator, a receiver of the emergency stop signal or the control part is required to treat the stoppage of the radio communication as the reception of the emergency stop signal. Accordingly, even when radio communication is stopped because of shortage of the amount of charge of the secondary battery, the robot is forcibly brought to an emergency stop. This may, significantly decrease the productive efficiency in an automatic operation.

Moreover, document DE 103 44 359 A1 discloses a method and a device for communication with a plant, wherein the device is a wireless portable battery-operated device. This device comprises a communication device, a measuring device, a control device and further a display means and a stop-key for deactivating the plant manually. During operation, a state of charge of the battery is recorded and from this state a predicted remaining operation time of the portable device is determined and displayed to an operator. After reaching different threshold values of the remaining operation time, successive restrictions of features in the portable device are achieved and after a last threshold value is exceeded the activation of a stop function at the technical facility is executed. Further, different alerts can be output to the user when the remaining operation time approaches zero.

Furthermore, document EP 0.734 817 A1 discloses a fail-safe hand-held portable controller for a robot, which executes the operation of an industrial robot. This portable controller comprises on a side edge a finger-fitting portion and a deadman's switch. When no pressure is applied to the finger-fitting portion, the deadman's switch is turned off. Once the finger-fitting portion is gripped, the dead-man's switch is turned on by pressing force, however it is also turned off when the finger-fitting portion is pressed by pressing force greater than pressing force when the finger-fitting portion is gripped.

In addition, document US 6,051,894 A describes a safety device for an industrial robot, which comprises a switch with two contacts working simultaneously, wherein a CPU is always monitoring the state of the two contacts by judging if the states of the two signal lines are matching or not. If miss-matching is judged, the supply of servo power source is stopped immediately. This switch device is used as a Portable console and as a dead-man's switch. Furthermore, the robot control device also contains an input terminal for feeding a door switch signal, whether a door of a safety fence is open or close.

As another background to the prior art, document WO 02/078915 A1 is mentioned.

### SUMMARY OF THE INVENTION

Accordingly, an object of the present invention is to provide a robot controller for preventing an emergency stop of a robot due to stoppage of radio communication due to shortage of the amount of charge of a secondary battery of a portable operating part during automatic operation of the robot.

To this end, according to the present invention, there is provided a robot controller according to claim 1.

The robot controller may further comprise a warning means for generating a warning when electrical connection between the portable operating part and the robot control part is not established and when the amount of charge of the secondary battery falls below a first level.

In this case, the robot control part may bring the robot to the emergency stop when electrical connection between the portable operating part and the robot control part is not established and when the amount of charge of the secondary battery falls below a second level which is lower than the first level.

Also, the robot control part may bring the robot to the emergency stop when electrical connection between the portable operating part and the robot control part is not established and when the amount of charge of the secondary battery falls below a first level and when a safety fence of the robot is opened.

### BRIEF DESCRIPTION OF THE DRAWINGS

The above and other objects, features and advantages of the present invention will be made more apparent by the following description of the preferred embodiments thereof, with reference to the accompanying drawings, wherein:
Fig. 1 shows a schematic configuration of a robot system including a robot controller of the invention; and
Fig. 2 shows a schematic configuration of a portable operating part of the robot controller.

### DETAILED DESCRIPTION

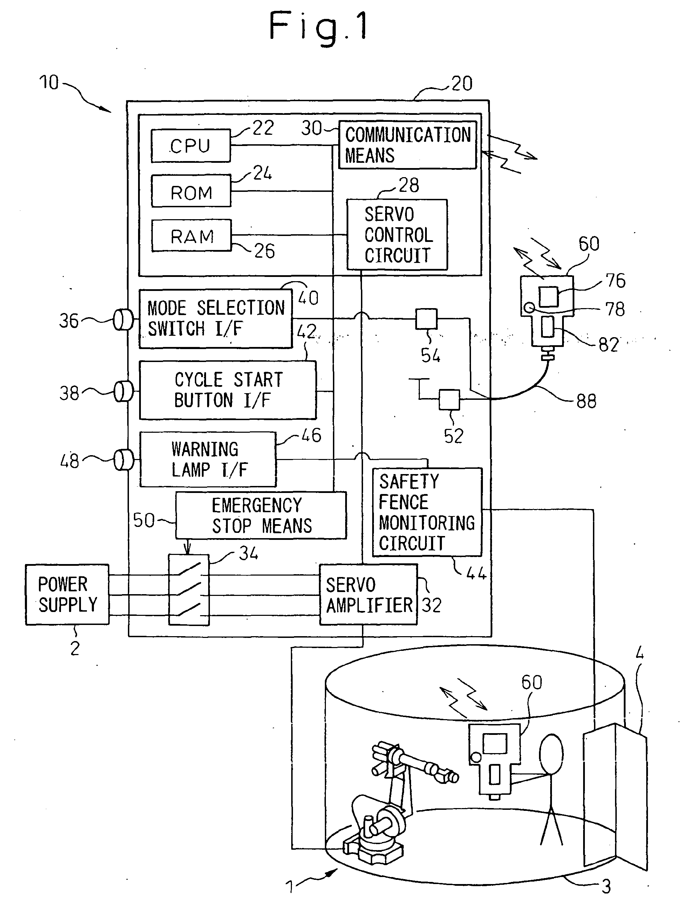

Hereinafter, the present invention is described with reference to the drawings. Fig. 1 shows a schematic configuration of a robot system including a robot controller 10 of the invention. The robot controller 10 includes a robot control part 20 for controlling a robot 1. The robot control part 20 includes a CPU 22, a ROM 24 connected to the CPU 22, a RAM 26 and a servo control circuit 28. The control part 20 further includes a communication means 30 for communicating by radio with a portable operating part 60 as described below. The servo control circuit 28 may be arranged such that the circuit is associated with each axis of the robot 1 and may be used for supplying power to each servomotor (not shown) of the robot 1 via a servo amplifier 32. The servo amplifier 32 is electrically connected to a power supply 2 via an electromagnetic contactor 34 arranged on a power supplying path connected to the servo amplifier 32.

The robot controller 10 includes an operation mode selection switch 36 for specifying an operation mode of the robot and a cycle start button 38 for starting an automatic operation of the robot. The switch 36 and the button 38 are connected to the CPU 22 via a mode selection switch interface 40 and a cycle start button interface 42, respectively. Also, the robot controller 10 includes a monitoring circuit 44 for monitoring the state of a door 4 of a safety fence 3 surrounding the robot 1. The CPU 22 may be informed of the open or closed state of the door 4 by the monitoring circuit 44. The CPU 22 monitors the states of the switch 36, the button 38 and the door 4, and then suitably controls the robot 1 according to the states. In this case, in order to urge an operator to take precautions, the CPU 22 may illuminate a warning lamp 48 by means of a warning lamp interface 46. The warning lamp 48 also may be used as a warning means for indicating loss of the amount of charge of the portable operating part 60, as described below.

The robot controller 10 further includes an emergency stop means 50 connected to the electromagnetic contactor 34. The electromagnetic contactor 34 assumes an "off-state" by the emergency stop means 50 when the means 50 receives an emergency stop command from the CPU 22. Accordingly, power is not supplied to the servo amplifier 32 and the robot 1 is immediately brought to an emergency stop.

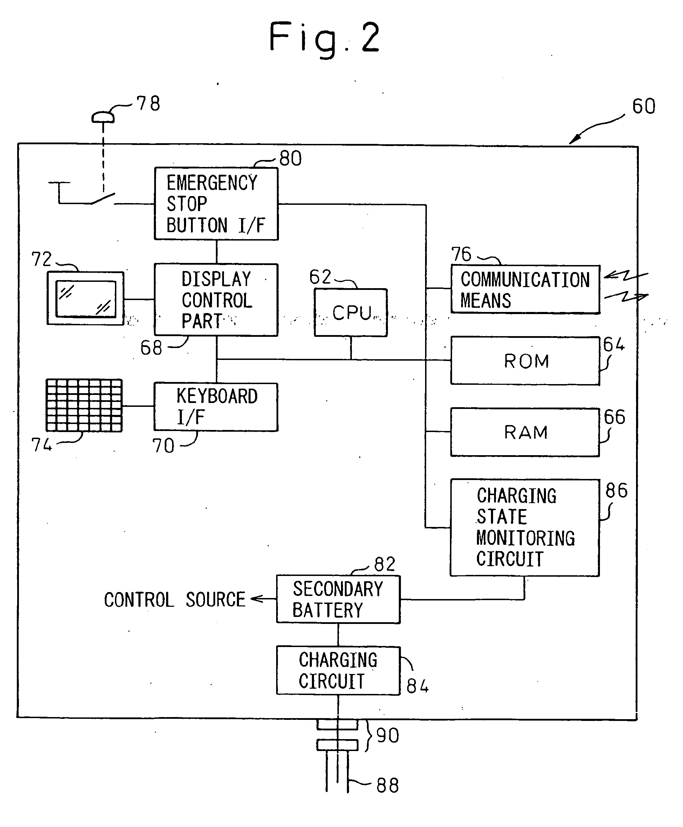

Next, the portable operating part 60 of the robot controller 10 is described. As shown in Fig. 2, the portable operating part 60, mainly used for teaching the robot, includes a CPU 62, a ROM 64, a RAM 66, a display control part 68 and a keyboard interface 70. An indicator 72 such as a liquid crystal display and a keyboard 74 operated by the operator are connected to the display control part 68 and the keyboard interface 70, respectively. The portable operating part 60 also includes a communication means 76 for communicating by radio with the robot control part 20.

The portable operating part 60 has an emergency stop button 78 at a suitable site where the operator may operate the button relatively easily. When the operator operates (for example, pushes) the button 78, an emergency stop signal is transmitted to the robot control part 20 via the communication means 76 and an emergency stop button interface 80.

The power for activating the portable operating part 60 is supplied from a secondary battery 82 provided in (for example, incorporated in) the portable operating part 60. The secondary battery 82 is charged by means of a charging circuit 84 provided in the portable operating part 60. Alternatively, the charging circuit may be provided in the control part 20. The state of charge of the secondary battery 82 may be monitored by a charging state monitoring circuit 86. The charging state monitoring circuit 86 may generate a first signal which indicates that the amount of charge of the secondary battery 82 is lower than a first level. At this point, the first level means a level in which the portable operating part 60 may normally function, but it is necessary to charge the secondary battery 82 if the portable operating part 60 is used successively. For example, the first level is between 10% and 20% of a full charge. Further, the monitoring circuit 86 may generate a second signal which indicates that the amount of charge of the secondary battery 82 is lower than a second level (for example, substantially zero %) which is lower than the first level. At this point, the second level means a level in which the radio communication between the portable operating part 60 and the robot control part 20 cannot be continued. As described below, the robot control part 20 immediately stops the robot 1 when communication from the portable operating part 60 is shut off. Therefore, when the second signal is generated, the robot control part 20 stops the robot 1, since the portable operating part 60 is no longer able to transmit data to the robot control part 20. On the other hand, when the first signal is generated, the robot control part 20 generates a warning requiring charging of the secondary battery of the portable operating part 60. In addition, the first and second signals may be indicated on the indicator 72.

The portable operating part 60 is provided with a connecting means for supplying power from the control part 20 to charge the secondary battery 82. In the embodiment, the connecting means includes a cable 88 and a connector 90 for connecting one end of the cable 88 to the portable operating part 60. The other end of the cable 88 is connected to a power supply 52 arranged in the robot control part 20, as shown in Fig. 1. In such a configuration, the secondary battery 82 may be charged while the portable operating part 60 is connected to the control part 20 by means of the cable 88 and the connector 90. It is preferable that the cable 88 be detached from the connector 90 such that the portable operating 60 may be operated while being separated from the control part 20 and operated during the teaching operation. By using the cable, the portable operating part 60 advantageously has portability to some extent, even if the portable operating part is charged or connected to the cable. Instead of using the cable, conductive elements positioned on suitable sites of the robot control part 20 and the portable operating part 60 may be used, the elements being configured to contact each other for supplying power to the portable operating part. Also, an electromagnetic induction method may be used for transmitting and supplying power to the portable operating part.

As described above, communication between the portable operating part 60 and the robot control part 20 may be performed by radio. The data from the portable operating part 60 received by the communication means 30 of the control part 20 may include general data such as position data of the robot and command data by jog feed, as well as the above first and second signals. The CPU 22 of the control part 20 controls the robot 1 according to the data. Such a general robot control technique may be similar to a conventional technique, and therefore a detailed description of the technique is omitted.

When the emergency stop button 78 of the portable operating part 60 is pushed by the operator, an emergency stop signal is transmitted to the control part 20 from the portable operating part 60. Then, the robot control part 20 sends an emergency stop command to the emergency stop means 50 to stop the robot 1. At this point, the control part 20 occasionally cannot receive the data transmitted from the portable operating part 60 due to, for example, shortage of the amount of charge of the secondary battery 82, malfunction of the communication means 30 or 76, or the noise of radio communication, etc. In such a case, the control part 20 cannot detect the push action on the emergency stop button 78, with the resulting that the robot 1 disadvantageously cannot be brought to the emergency stop. In order to avoid such a disadvantage, the robot control part 20 treats the breaking of communication between the portable operating part 60 and the control part 20 as the transmission of the emergency signal, and then stops the robot 1.

Therefore, the robot 1 is also brought to an emergency stop when data communication is stopped due to shortage of the amount of charge of the secondary battery 82. However, during automatic operation of the robot, the portable operating part 60 may be positioned near the control part 20, and thus in the invention, the second battery 82 may be charged by using the cable 88. Accordingly, an emergency stop of the robot due to shortage of the amount of charge of the second battery 82 may be avoided during automatic operation.

As shown in Fig. 1, the robot control part 20 includes a connection state monitoring means or circuit 54 for monitoring whether the portable operating part 60 is surely connected to the control part 20 by the cable 88. When the monitoring circuit 54 detects that the portable operating part 60 is not connected to the cable 88 during automatic operation of the robot 1, the control part 20 may give the operator a warning, for example by illuminating the warning lamp 48, so as to inform the operator of the fact. By way of this warning, shortage of the amount of charge of the secondary battery 82 is surely avoided during automatic operation. In addition, the warning lamp 48 may be arranged on the portable operating part 60. Alternatively, instead of the warning lamp 48, a warning message may be displayed on the indicator 72 of the portable operating part 60 or an alarm may be sounded.

In the embodiment using the cable, the connection state monitoring circuit 54 may be configured such that one pin (not shown) arranged on the end of the connector 90 near the portable operating part 60 is set to zero volts and a signal from the pin may be read as a low-level signal when the portable operating part is connected to the cable 88 and as a high-level signal when the portable operating part is not connected to the cable 88, for example. Alternatively, when the above conductive elements or the electromagnetic induction method can be utilized, a mechanical detecting switch (not shown), capable of detecting whether the portable operating part 60 is positioned where the secondary battery 82 may be properly charged, may be used.

When the robot is automatically operated for production, the operator does not have to carry the portable operating part 60 inside the safety fence 3. Also, the operation is not interfered with even if the portable operating part is connected to the robot control part 20 directly or via the cable. At this point, when the robot 1 is automatically operated and the secondary battery 82 cannot be charged (i.e., the portable operating part is not connected to the cable 88), the CPU 22 of the control part 20 transmits a command for generating a warning requiring charging of the secondary battery. Therefore, an emergency stop of the robot during the automatic operation, which may cause a significant loss, may be surely avoided. In addition, the command for generating the warning may be generated by a logical circuit (not shown) other than the CPU 22.

On the other hand, in a case where electrical connection between the control part 20 and the portable operating part 60 is not established (for example, when the operator carries the portable operating part inside the safety fence 3 and operates the portable operating part near the robot 1 for teaching the robot), the portable operating part is operated while separated from the cable 88. In the embodiment, since the portable operating part 60 may communicate with the control part 20 by radio, the cable which may become an obstacle to the operation inside the safety fence 3 does not have to be carried inside the fence.

When the amount of charge of the secondary battery 82 decreases during the teaching operation, a warning is generated by the above first signal, whereby the operator can notice that the secondary battery is to be charged. In this case, the operator may interrupt the teaching operation, charge the secondary battery 82 and restart the operation. Otherwise, if the operator continues the operation without charging the battery after the warning is generated, the above second signal is generated. Then, the portable operating part 60 is no longer able to communicate with the control part 20, whereby the control part 20 stops the robot 1 for safety. However, since the teaching operation is one of preparatory works of the robot operation, an emergency stop during the teaching operation does not seriously affect productive efficiency, as in the automatic operation.

When the first signal is generated, the robot control part 20 may immediately stop the robot. In more detail, when the safety fence 3 is open at the time of generating the first signal, the control part 20 judges that the operator is within the safety fence 3 for the teaching operation or the like. Therefore, the robot 1 may be immediately stopped for safety before the second signal is generated.

Also, the portable operating part 60 may communicate with the robot control part 20 by a conventional electric cable (not shown) instead of by radio. Depending on the kind of a noise, such a wired system may have a tolerance for noise higher than that of a radio system. Therefore, a disturbance caused by noise may be reduced of, eliminated by using the wired system. In addition, in the wired system, it is preferable that the electric cable also be used as a charging cable for the secondary battery.

According to the robot controller of the invention, the secondary battery of the portable operating part may be constantly charged during automatic operation of the robot. Therefore, an emergency stop of the robot due to shortage of the amount of charge of the battery may be avoided. Further, since an alarm is generated if the robot is automatically operated while the secondary battery is not charged, shortage of the amount of charge of the battery is surely avoided.

On the other hand, when the portable operating part is operated near the robot for a teaching operation or the like, the portable operating part may communicate with the control part by radio. Therefore, when the amount of charge of the secondary battery is lower than a predetermined level the operator may become aware of the fact by way of an alarm.

## Claims

1. A robot controller (10) including:
- a robot control part (20) for controlling a robot (1);
- a portable operating part (60) having an emergency stop button (78) for bringing the robot (1) to an emergency stop, and a secondary battery (82), wherein the portable operating part (60) is capable of being separated from the robot control part (20) and activated by the secondary battery (82); and
- a means (50) for bringing the robot (1) to an emergency stop either when an emergency stop signal is generated by operating the emergency stop button (78) or when communication between the robot control part (20) and the portable operating part (60) is interrupted,
**characterized in that** the robot controller (10) comprises:
- a charging circuit (84), adapter to charge the secondary battery (82), contained in one of the robot control part (20) and the portable operating part (60);
- a connecting means (88, 90) for electrically connecting the portable operating part (60) to the robot control part (20) such that the secondary battery (82) may be charged during an automatic operation of the robot (1), wherein the connecting means (88, 90) comprises a connector (90) arranged on the portable operating part (60) and a cable (88) detachably connected to the connector (90);
- a detecting means (54) for detecting a state in which electrical connection between the portable operating part (60) and the robot control part (20) is not established through said connecting means; and
- a warning means (48) for generating a warning when the detecting means (54) detects the state, in which electrical connection between the portable operating part (60) and the robot control part (20) is not established through said connecting means, during automatic operation of the robot (1),
wherein communication between the portable operating part (60) and the robot control part (20) is performed by radio when electrical connection between the portable operating part (60) and the robot control part (20) is not established through said connecting means.

2. The robot controller as set forth in claim 1,
**characterized in that** the controller has a warning means (86, 48) for generating a warning when electrical connection between the portable operating part (60) and the robot control part (20) is not established and when the amount of charge of the secondary battery (82) falls below a first level.

3. The robot controller as set forth in claim 2,
**characterized in that** the robot control part (20) brings the robot (1) to an emergency stop when electrical connection between the portable operating part (60) and the robot control part (20) is not established and when the amount of charge of the secondary battery (82) falls below a second level which is lower than the first level.

4. The robot controller as set forth in claim 1,
**characterized in that** the robot control part (20) brings the robot (1) to an emergency stop when electrical connection between the portable operating part (60) and the robot control part (20) is not established and when the amount of charge of the secondary battery (82) falls below a first level and when a safety fence (3) of the robot (1) is opened.

## Patentansprüche

1. Robotersteuerung (10) umfassend:
- ein Robotersteuerteil (20) zum Steuern eines Roboters (1);
- ein tragbares Bedienteil (60) umfassend einen Not-Aus-Knopf (78), um den Roboter (1) in einen Not-Aus-Zustand zu bringen, und eine Sekundärbatterie (82), wobei das tragbare Bedienteil (60) dazu ausgebildet ist, von dem Robotersteuerteil (20) separiert und durch die Sekundärbatterie (82) aktiviert zu werden; und
- ein Mittel (50), um den Roboter (1) in einen Not-Stop-Zustand zu bringen, entweder wenn ein Not-Stop-Signal durch die Betätigung des Not-Aus-Knopfs (78) erzeugt wurde oder wenn die Kommunikation zwischen dem Robotersteuerteil (20) und dem tragbaren Bedienteil (60) unterbrochen wurde,
**dadurch gekennzeichnet, dass** die Robotersteuerung (10) umfasst:
- einen Ladekreis (84), der dazu ausgelegt ist, die Sekundärbatterie (82) zu laden, und der in dem Robotersteuerteil (20) oder dem tragbaren Bedienteil (60) enthalten ist;
- ein Verbindungsmittel (88, 90) zum elektrischen Verbinden des tragbaren Bedienteils (60) mit dem Robotersteuerteil (20), so dass die Sekundärbatterie (82) während einem Automatikbetrieb des Roboters (1) geladen werden kann, wobei das Verbindungsmittel (88, 90) einen an dem tragbaren Bedienteil (60) angebrachten Verbinder (90) und ein mit dem Verbinder (90) lösbar verbundenes Kabel (88) aufweist;
- ein Erfassungsmittel (54) zum Erfassen eines Zustandes, in dem keine elektrische Verbindung zwischen dem tragbaren Bedienteil (60) und dem Robotersteuerteil (20) durch das Verbindungsmittel hergestellt ist; und
- ein Warnungsmittel (48) zum Erzeugen einer Warnung, wenn das Erfassungsmittel (54) den Zustand erfasst, in dem keine elektrische Verbindung zwischen dem tragbaren Bedienteil (60) und dem Robotersteuerteil (20) durch das Verbindungsmittel während dem Automatikbetrieb des Roboters (1) hergestellt ist, wobei die Kommunikation zwischen dem tragbaren Bedienteil (60) und dem Robotersteuerteil (20) über Funkverbindung erfolgt, wenn keine elektrische Verbindung zwischen dem tragbaren Bedienteil (60) und dem Robotersteuerteil (20) durch das Verbindungsmittel besteht.

2. Robotersteuerung nach Anspruch 1,
**dadurch gekennzeichnet, dass** die Steuerung ein Warnungsmittel (86, 48) zum Erzeugen einer Warnung aufweist, wenn keine elektrische Verbindung zwischen dem tragbaren Bedienteil (60) und dem Robotersteuerteil (20) besteht, und wenn der Ladungszustand der Sekundärbatterie (82) unter ein erstes Level fällt.

3. Robotersteuerung nach Anspruch 2,
**dadurch gekennzeichnet, dass** das Robotersteuerteil (20) den Roboter (1) in einen Not-Stop-Zustand bringt, wenn keine elektrische Verbindung zwischen dem tragbaren Bedienteil (60) und dem Robotersteuerteil (20) besteht, und wenn der Ladungszustand der Sekundärbatterie (82) unter ein zweites Level fällt, das unter dem ersten Level liegt.

4. Robotersteuerung nach Anspruch 1,
**dadurch gekennzeichnet, dass** das Robotersteuerteil (20) den Roboter (1) in einen Not-Stop-Zustand bringt, wenn keine elektrische Verbindung zwischen dem tragbaren Bedienteil (60) und dem Robotersteuerteil (20) besteht, und wenn der Ladungszustand der Sekundärbatterie (82) unter ein erstes Level fällt, und wenn ein Sicherheitszaun (3) des Roboters (1) geöffnet ist.

## Revendications

1. Commande de robot (10) incluant :
- une partie de commande de robot (20) pour commander un robot (1) ;
- une partie opérationnelle portable (60) ayant un bouton d'arrêt d'urgence (78) pour mettre le robot (1) en arrêt d'urgence, et une batterie secondaire (82),
dans laquelle la partie opérationnelle portable (60) est apte à être séparée de la partie de commande de robot (20) et activée par la batterie secondaire (82) ; et
- un moyen (50) pour mettre le robot (1) en arrêt d'urgence soit lorsqu'un signal d'arrêt d'urgence est généré par manipulation du bouton d'arrêt d'urgence (78), soit lorsque la communication entre la partie de commande de robot (20) et la partie opérationnelle portable (60) est interrompue,
**caractérisée en ce que** la commande de robot (10) comprend :
- un circuit de charge (84), adapté pour charger la batterie secondaire (82), contenu dans l'une de la partie de commande de robot (20) et de la partie opérationnelle portable (60) ;
- un moyen de connexion (88, 90) pour connecter électriquement la partie opérationnelle portable (60) à la partie de commande de robot (20) de façon à ce que la batterie secondaire (82) puisse être chargée pendant un fonctionnement automatique du robot (1), dans laquelle le moyen de connexion (88, 90) comprend un connecteur (90) agencé sur la partie opérationnelle portable (60) et un câble (88) connecté de façon détachable au connecteur (90) ;
- un moyen de détection (54) pour détecter un état dans lequel la connexion électrique entre la partie opérationnelle portable (60) et la partie de commande de robot (20) n'est pas établie par l'intermédiaire dudit moyen de connexion ; et
- un moyen d'avertissement (48) pour générer un avertissement lorsque le moyen de détection (54) détecte l'état dans lequel la connexion électrique entre la partie opérationnelle portable (60) et la partie de commande de robot (20) n'est pas établie par l'intermédiaire dudit moyen de connexion, pendant un fonctionnement automatique du robot (1),
dans laquelle la communication entre la partie opérationnelle portable (60) et la partie de commande de robot (20) est effectuée par radio lorsque la connexion électrique entre la partie opérationnelle portable (60) et la partie de commande de robot (20) n'est pas établie par l'intermédiaire dudit moyen de connexion.

2. Commande de robot selon la revendication 1,
**caractérisée en ce que** la commande a un moyen d'avertissement (86, 48) pour générer un avertissement lorsque la connexion électrique entre la partie opérationnelle portable (60) et la partie de commande de robot (20) n'est pas établie et lorsque la quantité de charge de la batterie secondaire (82) tombe en-dessous d'un premier niveau.

3. Commande de robot selon la revendication 2,
**caractérisée en ce que** la partie de commande de robot (20) met le robot (1) en arrêt d'urgence lorsque la connexion électrique entre la partie opérationnelle portable (60) et la partie de commande de robot (20) n'est pas établie et lorsque la quantité de charge de la batterie secondaire (82) tombe en-dessous d'un deuxième niveau qui est inférieur au premier niveau.

4. Commande de robot selon la revendication 1,
**caractérisée en ce que** la partie de commande de robot (20) met le robot (1) en arrêt d'urgence lorsque la connexion électrique entre la partie opérationnelle portable (60) et la partie de commande de robot (20) n'est pas établie et lorsque la quantité de charge de la batterie secondaire (82) tombe en-dessous d'un premier niveau et lorsqu'une barrière de sécurité (3) du robot (1) est ouverte.
